# EUROPEAN PATENT APPLICATION

(11) **EP 3 878 608 A2**
(43) Date of publication of application: **15.09.2021**
(21) Application number: 21160877.3
(22) Date of filing: 05.03.2021
(51) Int. Cl.: B25J 15/04

(54) **PUSHER ARRANGEMENT**

(30) Priority: 11.03.2020 EP 20162406
(71) Applicant: Tetra Laval Holdings & Finance S.A., 1009 Pully (CH)
(72) Inventor: BAKER, Nick, 27194 Ystad (SE); Gamst, Erik, 224 64 Lund (SE)
(74) Representative: Tetra Pak - Patent Attorneys SE

(57) **Abstract**

A pusher assembly (200) configured to remove one or more misplaced packaging containers (20')is presented. The pusher assembly (200) comprises a gripper unit (10) comprising at least one vacuum suction cup (13). The gripper unit (10) is connected to the robotic arm. The pusher assembly (200) further comprises a pusher arrangement (100) comprising an interface plate (110), one or more extension means (130) and a pusher plate (120). The pusher plate (120) is arranged distanced from the interface plate (110) by said one or more extension means (130). The interface plate (110) is releasably attached to the gripper unit (10) by means of said at least one vacuum suction cup (13). A pusher arrangement (100) and an associated method are also detailed.

## Description

### Technical Field

The invention relates to a pusher assembly, and in particular to a pusher arrangement being configured to remove one or more misaligned containers. Also, the invention relates to a method for removing one or more misaligned packaging containers from a misalignment location.

### Background Art

Individual packaging containers, such as liquid food packaging containers, are typically produced from a carton-based material and filled using a filling machine. When the filled, formed, and sealed packaging containers are unloaded from the filling machine they are typically transferred to a cardboard packer in which a predetermined number of packaging containers are stacked in a packing pattern and placed in a case made from a cardboard blank, or to a wrapping machine or similar equipment that encloses groups of packaging containers.

During these operations there is a need to move the packaging containers from one location to another. For example, packaging containers need to be moved from the filling machine (or any conveyor associated thereto) to the cardboard packer (or any conveyor associated thereto).

In order to move packages from one area to another within industrial machine equipment, a robot arm can be used. The robot arm may be programmed to move in three or four dimensions. At the distal end of the robot arm, a gripper is arranged providing an interface between the machine and the packaging container.

In these fast-paced manufacturing environments there will be failures and due to e.g. damaged cardboard blanks, packages falling, misalignment etc. The time to restore the production line is called Mean Time to Restore, MTTR and is crucial. Robotic solutions to restore a production line exist. However, these are typically time consuming due to difficulties in accurately removing the cause of the fault. In other production environments, an operator is alerted and has to manually interact with the production line in order to get it up and running after a failure. Apart from being costly and time consuming, having operator interaction may increase the risk of contamination when handling food products.

The restoration of the production line consequently has to be fast and without human interaction and there is thus a need for an improvement to a gripper unit solving or at least mitigating the abovementioned problems.

### Summary

An object of the present invention is to provide a new type of machine interface termination which is improved over prior art and which eliminates or at least mitigates the drawbacks discussed above. More specifically, an object of the invention is to provide a pusher assembly configured to remove one or more misaligned packaging containers restoring a manufacturing line to a working state. These objects are achieved by the technique set forth in the appended independent claims with preferred embodiments defined in the dependent claims related thereto.

According to a first aspect, a pusher assembly is presented. The pusher assembly is configured to remove one or more misaligned packaging containers and comprises a gripper unit comprising at least one vacuum suction cup. The gripper unit is connected to the robotic arm. The pusher assembly further comprises a pusher arrangement comprising an interface plate, one or more extension means and a pusher plate. The pusher plate is arranged distanced from the interface plate by said one or more extension means. The interface plate is releasably attached to the gripper unit by means of said at least one vacuum suction cup.

In one variant of the pusher assembly, the pusher plate is configured in a meshed structure. This reduces the weight of the pusher plate thereby reducing the total weight of the pusher arrangement and moves a center of mass of the pusher arrangement closer to the interface plate with a reduction in torque at the gripper unit of the pusher assembly as a result.

In another variant of the pusher assembly, the pusher plate is substantially parallel to the interface plate. This enables the pusher assembly to push the one or more packaging container(s) in a substantially radial direction relative to the robotic arm thereby pushing them far from the robotic arm.

In yet another variant of the pusher, the pusher plate is substantially centered relative to the interface plate in at least one of a horizontal axis or a vertical axis. Having the pusher plate centered in such a manner is beneficial since it makes the pusher assembly easier to control since it can present a reduced front view making it easier to steer at tight locations.

In a further variant of the pusher, the pusher plate is connected to the interface plate by two extension means. One of the extension means is arranged in a substantially v-shaped form having its fulcrum at the interface plate. This arrangement presents a stable and robust design that is capable of exerting a pushing force at many points of the pusher plate without bending or skewing.

In a second aspect, a pusher arrangement comprising an interface plate, one or more extension means and a pusher plate, is provided. The pusher plate is arranged remote from the interface plate by said one or more extension means. The interface plate is configured to be releasably attached to a robotic arm and a gripper unit by means of at least one vacuum suction cup of the gripper unit.

In one variant of the pusher arrangement, the pusher arrangement is the pusher arrangement of the pusher assembly or any of its variants as presented above.

In a third aspect, a method for removing one or more misaligned packaging container(s) from a misalignment location is presented. The method comprises connecting a pusher arrangement to a robotic arm thereby forming a gripper assembly and moving the robotic arm to position a pusher plate of the pusher arrangement proximate to the misalignment location. The method further comprises moving the robotic arm along the misalignment location to push, by means of the pusher arrangement, said one or more misaligned packaging container away from the misalignment location.

In one variant of the method, the misalignment location is at a secondary package. This is beneficial since it allows the secondary package to be quickly cleared in a single action without human interaction.

In another variant, the misalignment is outside of a work-space of the robotic arm. Since the pusher arrangement extends the reach of the robotic arm, areas that would normally not be reached without manual intervention can be cleared.

In a further variant, the step of connecting the pusher arrangement to the robotic arm comprises moving the robotic arm to an idle location of the pusher arrangement. Having the robotic arm pick up the pusher arrangement from an idle location is beneficial since allows the gripper arrangement it may be securely stored at the idle location when not used by the robotic arm.

In yet another variant of the method, it comprises disconnecting the pusher arrangement from the robotic arm. This is beneficial since it frees the robotic arm for normal operation, when for instance misaligned packaging containers have been removed from the misalignment location by means of the pusher arrangement.

In one variant of the method, before the step of disconnecting the pusher arrangement, the robotic arm is returned to the idle location of the pusher arrangement. This is beneficial since it frees the robotic arm for normal operation, when for instance misaligned packaging containers have been removed from the misalignment location by means of the pusher arrangement. It also allows the gripper arrangement to be securely stored at the idle location when not used by the robotic arm.

In a further variant of the method, the pusher arrangement is the pusher arrangement of any aspects or variants previously presented and/or wherein the pusher assembly is the pusher assembly any aspects or variants previously presented.

In a fourth aspect, a non-transitory computer-readable storage medium is presented. The medium stores one or more software programs configured for execution by one or more processors. The one or more software programs comprises instructions for performing the method according to any aspects or variants previously presented.

### Brief Description of the Drawings

Embodiments of the invention will be described in the following; references being made to the appended diagrammatical drawings which illustrate non-limiting examples of how the inventive concept can be reduced into practice.
Fig. 1 is a schematic view of a production line;
Figs. 2a-d are schematic views of gripper units;
Figs. 3a-b are top-views of details in a production line;
Figs. 4ac are perspective views of a pusher arrangement according to embodiments of the invention;
Figs. 5a-c are front views of a pusher arrangement according to embodiments of the invention;
Fig. 6a is a perspective view of a pusher assembly according to embodiments of the invention;
Fig. 6b is a cross sectional side view of a pusher assembly according to embodiments of the invention;
Fig. 7 is a schematic view of a method according to embodiments of the invention;
Fig. 8 is a schematic view of a non-transitory computer-readable storage medium according to embodiments of the invention.

### Detailed description

Hereinafter, certain embodiments will be described more fully with reference to the accompanying drawings. The invention may, however, be embodied in many different forms and should not be construed as only limited to the embodiments set forth herein; rather, these embodiments are provided by way of example so that this disclosure will be thorough and complete and fully convey the scope of the invention to those skilled in the art, such as is defined in the appended claims.

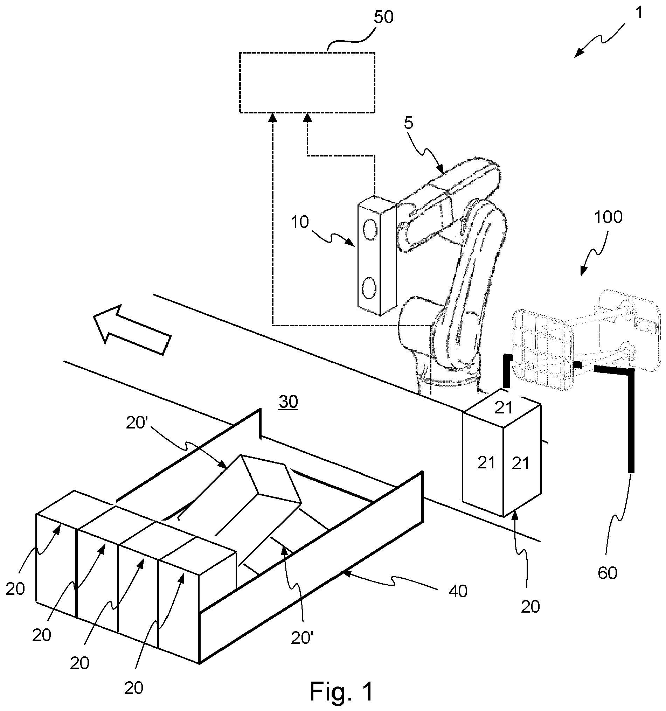

Starting from Fig. 1, a schematic view of a production line 1 is shown. A robotic arm 5 comprising a gripper unit 10 is depicted according to an embodiment. The gripper unit 10 is provided on the distal end of the robotic arm 5. In the embodiment in Fig. 1, the robotic arm 5 is a delta robot, or an articulated robot having at least three rotary joints. Articulated robots, as well as delta robots, are well known in the art and will not be described further herein.

The robotic arm assembly 5 is arranged in a machine environment exemplified, such as between a filling machine and secondary package 40 or other type of equipment. The term "secondary package" should be construed as packaging intended to contain one or more packaging containers filled with a product. One non-limiting example is the production line 1 of Fig. 1. In such examples, the robotic arm 5 is provided in order to move individual packaging containers 20, being folded, filled and sealed by a filling machine and discharged therefrom by means of a conveyor 30. The packaging containers 20, which typically are formed with at least one planar panel 21, are gripped by the robotic arm assembly 5 as they are transported on the conveyor 30 and moved to the secondary package 40. It should be noted that the planar panels 21 of the packaging containers 20 may not necessarily form an entire side of the packaging container 20, but should preferably form a planar surface big enough to be gripped by the gripper unit 10.

The robotic arm assembly 5 is configured to operate at very high speed; from an idle position, it must be capable of performing the following motion sequence: arranging the gripper unit 10 in close proximity to the approaching packaging container 20, activating the gripper unit 10 in order to attach the packaging container 20 to the gripper unit 10, moving the gripper unit 10 and the attached packaging container 20 to the desired position, releasing the packaging container 20 by deactivating the gripper unit 10, and to return to the idle position.

A controller 50 is therefore provided and connected to the gripper unit 10 in order to control activation and deactivation of the gripper unit 10. In some embodiments, the controller 50 is also in communication with the robotic arm 5.

The controller 50 preferably comprises a non-transitory computer-readable storage medium, storing one or more programs configured for execution by one or more processors, the one or more programs comprising instructions for controlling the gripper unit 10.

The gripper unit 10 may be any suitable gripping means for engaging with the planar panel 21 of a packaging container 20. In one embodiment, the gripper unit 10 is realized as a device capable of exerting a controllable suction or vacuum at the planar panel 21 of a packaging container 20. The control of the suction/vacuum may be in a straightforward on/off manner meaning the vacuum suction is activated and deactivated. In the coming sections, a comparably more advanced embodiment of the gripper unit 10 will be disclosed, as it should be emphasized that this comparably more advanced gripper unit is not mandatory for implementing the disclosed invention.

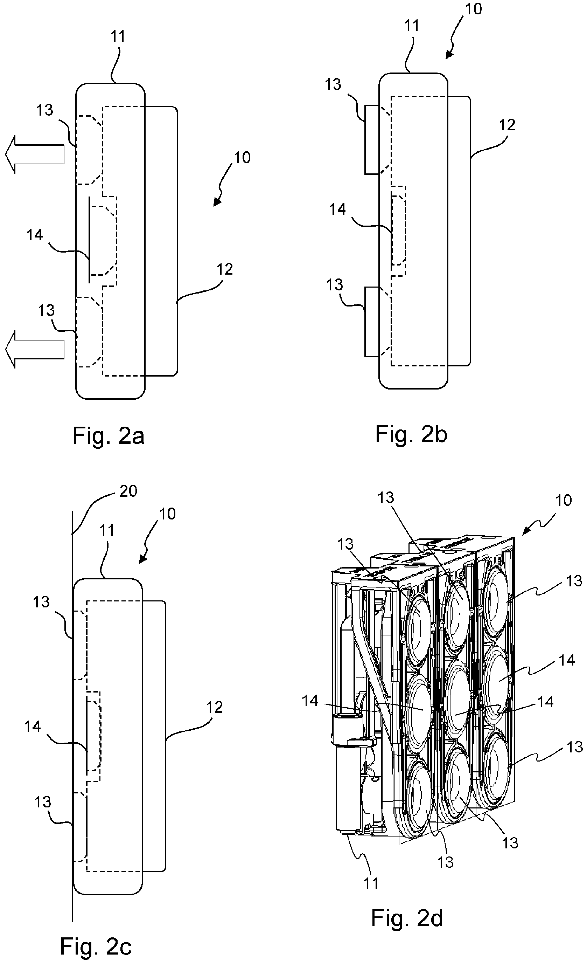

Now turning to Figs. 2a-d further details of the gripper unit 10 are shown. The gripper unit 10 is preferably a vacuum gripper unit 10 being capable of attaching an adjacent packaging container 20 by applying a suction force using one or more vacuum cups 13.

The gripper unit 10 comprises a housing 11 and a vacuum distribution unit 12. The vacuum distribution unit 12 is moveable in relation to the housing 11 and comprises at least one suction cup 13. In the shown example, the vacuum distribution unit 12 comprises two spaced apart suction cups 13 for attaching to the packaging container 20 by applying vacuum, and one control suction cup 14.

All suction cups 13, 14 are preferably activated simultaneously. This is particularly the case when the suction cups 13, 14 share common air. By activation of the control suction cups 13, 14, the vacuum distribution unit 12 is moved towards the housing 11, in the direction indicated by the block arrows in Fig. 2a. Hence, the vacuum distribution unit 12 is moved from an idle position (shown in Fig. 2a) to an active position (shown in Fig. 2b). When the vacuum distribution unit 12 is in the active position, the suction cups 13 are arranged in an extended position, i.e. the distal end of each suction cup 13 is arranged outside the housing 11.

In the active position, as shown in Fig. 2b, the gripper unit 10 is ready to grip a packaging container 20. As vacuum is applied upon activation of the suction cups 13, 14, a suction force is generated in each suction cup 13, 14 thereby pulling the packaging container, as shown in Fig. 2c towards the housing 11. Due to the flexible material of the suction cups 13, the planar panel 24 of the packaging container will be in contact, and flush with, the housing 11.

The gripper unit 10 is used to collate individual packaging containers 20 while they are in motion, necessitating the activation of the suction cups 13. The vacuum operated suction cups 13 need to engage with the packaging containers that they are picking in order to attain a seal, and therefore a robust grip.

Should the suction cup 13 stand out from of the housing 11 (and ready to contact a packaging container), it would possibly impede the collection of the packaging container. Thus, the gripper unit 10 described herein is configured to retract the suction cups 13, leaving a "clean" housing surface that does not impede packaging container movement.

In fact, the suction cups 13 are controlled to protrude to ensure the suction cups 13 meet the packaging container before the housing 11. The suction cups 13 are retracted by cutting off air supply to vacuum generators (not shown), in order to ensure the suction cups 13 do not interfere with packaging containers 20 being placed.

In the embodiment shown in Figs. 2a-c, three vacuum cups 13, 14 are employed and mounted together on the common vacuum distribution unit 12. Two suction cups 13 are configured to grip the packaging container 20, and the third suction cup 14 acts as an actuator to pull the vacuum distribution unit 12 forwards.

During operation, placement of the packaging container will be stable as the suction cups 13 withdraw from the packaging container, into the housing 11, as the vacuum is released. This is achieved by de-activating the control suction cup 14 and the suction cups 13 simultaneously, whereby the vacuum distribution unit 12 is allowed to return to its idle position of Fig. 2a.

In Fig. 2d, a perspective view of a gripper unit 10 according to one non-limiting embodiment is shown. In this embodiment, the gripper unit 10 is formed with six suction cups 13 and three actuator suction cups 14. The suctions cups 13 arranged in two horizontal groups, one vertically aligned above the other, of three suctions cups 13 each. The three actuator suction cups 14 are horizontally arranged between the two horizontal groups of suction cups 13. The suction cups 13,14 may be controlled individually, in vertical or horizontal pairs or triplets. The exemplified arrangement of the suction cups 13, 14 in Fig. 2d is provided in order to emphasize the freedom with which the gripper unit 10 can be configured and should not be considered as limiting but rather as inspiring in the formation of the gripper unit 10.

From the above, it can be deduced that the gripper unit 10 is adapted to engage with a panel 21 of a packaging container 20 at a predetermined angle. This is the normal mode of operation and works fluently and well until there is a misalignment of the packaging container 20. A misaligned packaging container 20 will be referred to as a misplaced packaging container 20' and this is comprises all packaging containers 20' placed in such a way, or in such a location, that they can't be gripped directly by the gripper unit 10.

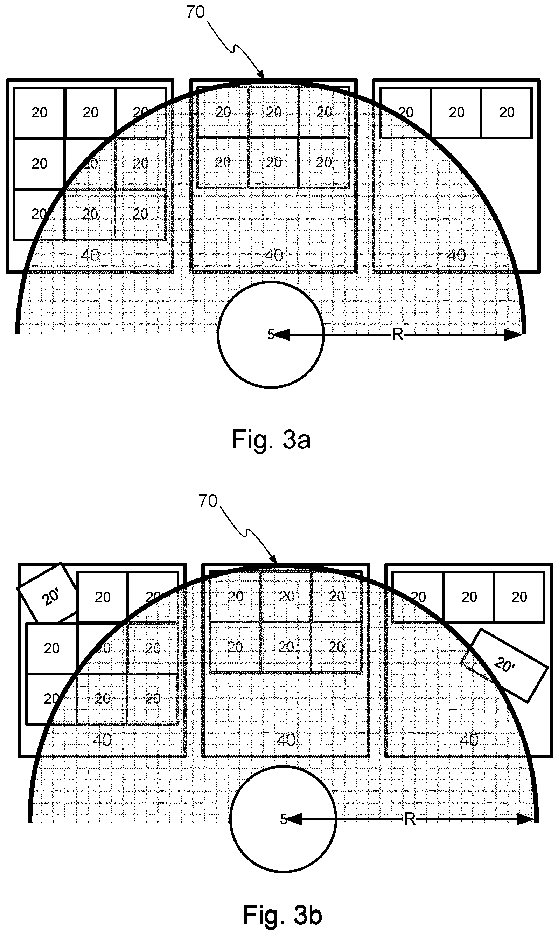

In Figs. 3a and 3b, a schematic top view of the robotic arm 5 is shown. The robotic arm 5 has a work-space 70 illustrated in Fig. 3a and 3b in the form of a semicircle with a radius R. The work-space 70 is the area of reach for the robotic arm 5 during normal operation. In Fig. 3a, a number of secondary packages 40 are illustrated each holding a plurality of packaging containers 20. As seen, the work-space 70 of the robotic arm 5 does not fully cover all areas of the secondary packages 40. The reason for this may be e.g. time, cost etc. A robotic arm 5 having a work-space 70 covering all secondary packages 40 would be inefficient, so the robotic arm 5 may be configured to place the packaging container 20 at a location in the secondary package 40 as close to the robotic arm 5 as possible. Such a configuration will push packaging containers 20 already in the secondary package 40 away from the robotic arm 5. This allows the secondary packages 40 to be completely filled with packaging containers 20 without having the robotic arm 5 move all the way to the furthest location of the secondary package 40 when placing packaging containers 20. The robotic arm 5 may alternatively be configured to place the packaging containers 20 at a location as far into the in the secondary package 40 as it can reach.

In Fig. 3b, some of the secondary packages 40 are shown as comprising a number of misplaced packaging containers 20'. The misplaced packaging containers 20' will hinder the process of moving packaging containers 20 from the conveyor 30 to the secondary package 40. Consequently, the misplaced packaging containers 20' will have to be removed before the moving of packaging containers 20 can progress further. The time this restoration takes, must, as explained earlier, be short and preferably without human interaction. The example given with Fig. 3b shows the misplaced packaging containers 20' as located in the secondary package 40. Naturally, the misplaced packaging containers 20' may be located anywhere and the location of the misplaced packaging containers 20' will, at times, be referred to as a misplacement location 30, 40. To further exemplify, the misplaced packaging containers 20' may be located anywhere such that they hinder, interfere with or otherwise adversely affect the production process, e.g. the secondary package 40 or the conveyor 30. In some cases, the misplacement location 30, 40 is such that it is out of reach of the gripper unit 10. This may be the case when a packaging container 20 falls such that it ends up at a location not reachable by the gripper unit 10. Either way, as seen in Fig. 3b, the misplaced packaging containers 20'may be located at a misplacement location 30, 40 outside the work-space 70 of the robotic arm 5 or within the work-space 70 of the robotic arm.

Staying with Fig. 3b, the inventors behind this disclosure have realized that a pusher arrangement capable of interacting with the packaging containers 20 and the misplaced packaging containers 20' in a quick an efficient manner will reduce the time it takes to restore the production line. By arranging a pusher arrangement 100 between the gripper unit 10 and the containers 20, 20, the reach of the gripper unit 10 may be extended , such that the misplacement location 30, 40 can be cleared of unwanted items even if it is located outside the work-space 70 of the robotic arm.

In Fig. 1, the pusher arrangement 100 is shown supported by an optional support structure 60. This support structure may be any means or structure suitable for storing the pusher arrangement 100 when it is not used. Moreover, the location of the pusher arrangement 100 when it is not used, i.e. when it is idle, may occasionally be referred to as an idle location 60. The idle location 60 is typically located in the proximity of and within reach of the robotic arm 5.

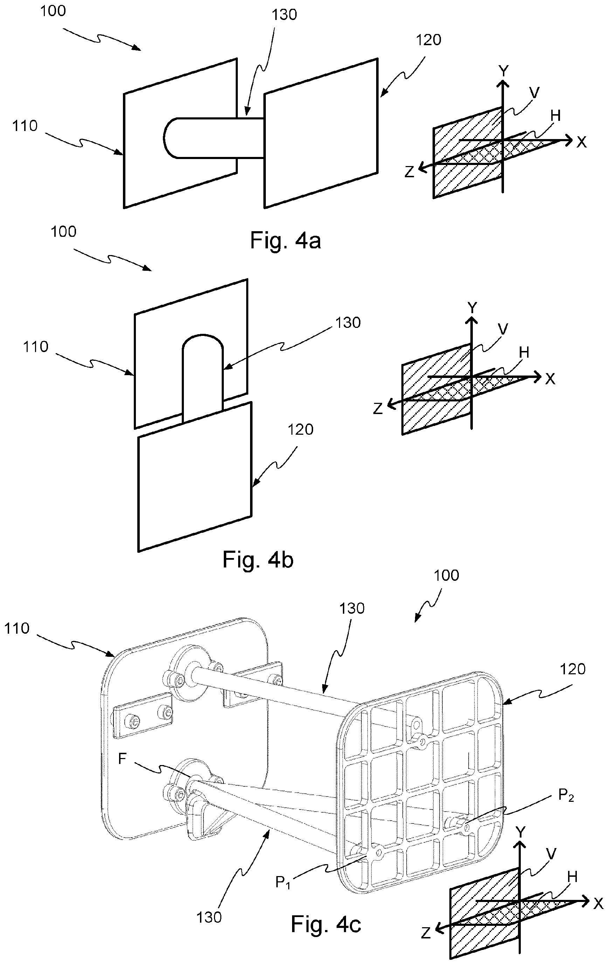

Turning to Figs. 4a and 4b, perspective views of the pusher arrangement 100 according to embodiments of the invention are shown. In Figs. 4a and 4b, a geometric reference is shown indicating a horizontal axis X, a vertical axis Y and depth axis Z. A horizontal plane H is defined as the two-dimensional plane described between the horizontal axis X and the depth axis Z. A corresponding vertical plane V is defined as the two-dimensional plane described between the vertical axis Y and the depth axis Z. These geometric references are common between all figures where they are depicted.

The pusher arrangements 100 of Fig. 4a and 4b comprises an interface plate 110 and a pusher plate 120. The pusher plate 120 is connected to the interface plate 110 by one or more extension means 130 such that the pusher plate 120 is distanced from the interface plate 110. In Fig. 4a, the extension means 130 is arranged such that the pusher plate 120 is distanced from the interface plate 110 in at least the horizontal plane H. Comparing this to Fig. 4b, the extension means 130 is arranged such that the pusher plate 120 is distanced from the interface plate 110 in at least the vertical plane V. The preferred embodiment is that depicted in Fig. 4a wherein the pusher plate 120 is distanced from the interface plate 110 along at least the horizontal axis X. This means that, assuming that the top view of Fig. 3b is such that the work-space 70 of the robotic arm is shown on the horizontal plane H, the reach of the robotic arm 5 will be increased by the extension the pusher arrangement 100 provides along the horizontal axis X. Analogously, the reach of the robotic arm 5 may be increased along the vertical axis Y when used together with the pusher arrangement 100 described in the embodiment shown in Fig. 4b.

Fig. 4c illustrates a more detailed perspective view of the pusher arrangement 100 according to embodiments of the invention. In this embodiment, the pusher arrangement is provided with two extension means 130 which makes the pusher plate 120 more stable and less sensitive to forces unevenly distributed along the vertical plane of the pusher plate 120. If, for instance, a large number of packaging containers 20' and/or misplaced packaging containers 20' are to be pushed, it may be that the greater part of the pushing force is exerted to a lower part of the vertical axis Y. The added extension means 130 mitigates this problem. More extension means 130 may of course be added and their distribution can, after reading this disclosure, be optimized by the skilled person. In Fig. 4c, one of the extension means 130 is configured to contact the pusher plate 120 at two separate points Pi, P₂ and the interface plate 110 at a single point F arranging the extension means 130 in a substantially v-shaped form. The fulcrum F of the v-shaped extension means 130 is the single point F where the extension means 130 contacts the interface plate 110. The separate contact points P₁, P₂ are in Fig. 4c shown as separated along the depth axis Z, this provides stability and reduces the risk of skewing when the pusher plate 120 is exerted to a force that is offcentered relative the depth axis Z of the pusher plate 120. The v-shape is beneficial also since it reduces the number fastening points needed in the interface plate 110. Depending on how the fastening of the extension means 130 to the interface plate 110 is realized, it may introduce one more holes in the interface that may make it more difficult to attach to the gripper unit 10 by means of the suction cups 13 as will be explained later. Note that the configuration of the extension means 130 is not necessarily linked to embodiments having all the features shown if Fig. 4c. The configuration of the extension means 130 is, in other words, a separate feature that may be combined with any other embodiments of the pusher arrangement as the skilled person sees fit.

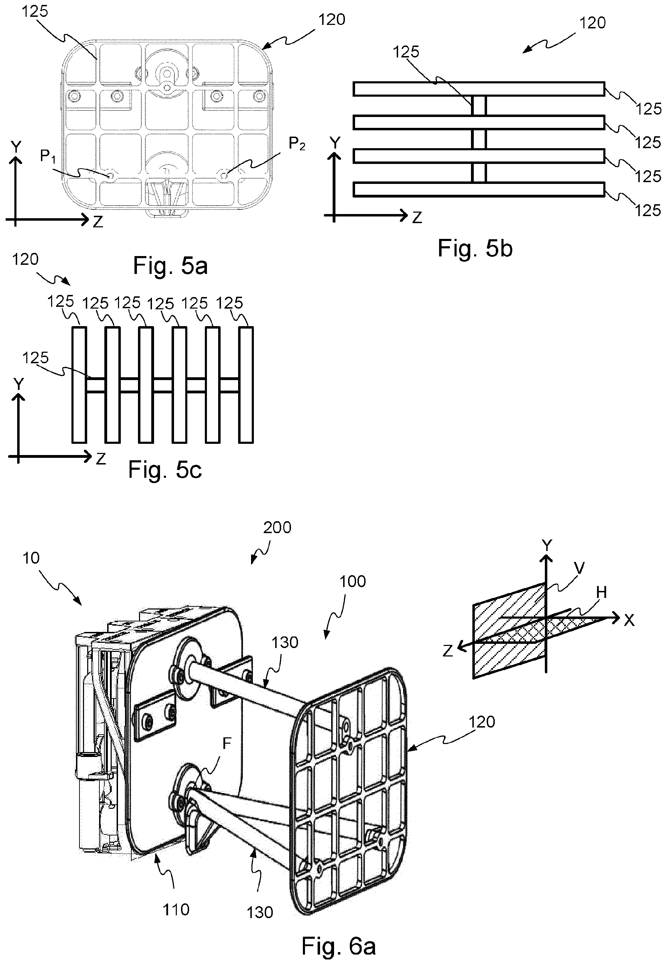

In embodiments of pusher arrangement 100, the pusher plate 120 is presenting a homogenous surface towards packaging containers 20 to be pushed. However, as seen din Fig. 4c, the pusher plate 120 may be provided with openings or formed in a mesh or matrix like structure. With reference to Figs. 5a-c, embodiments of the pusher plate 120 will be presented. Fig. 5a is a front view of the pusher arrangement shown in a perspective view in Fig. 4c. The pusher plate 120 in this embodiment is constructed in a meshed like structure of pusher elements 125 extending along the vertical axis Y and the depth axis Z. In Fig. 5a, there is an optional pusher element 125 framing the meshed structure of pusher elements to increase the stability of the structure. Depending on e.g. requirements, choice of material etc., the pusher plate may be formed in any suitable way. In Fig. 5b, one embodiment of a pusher plate 120 is depicted with a majority of the pusher elements 125 arranged along the depth axis Z and only one vertical pusher element 125 to distance and attach the depth wise oriented pusher elements 125. In Fig. 5c, an alternative embodiment is presented wherein a majority of the pusher elements 125 are oriented along the vertical axis Y and only one pusher element 125 is horizontally arranged to distance and attach the vertically oriented pusher elements 125.

It should be mentioned, that although the pusher plates 120 to this point may be interpreted as substantially planar pusher plates 120, there are embodiments a concavely or convexly shaped pusher plate 120 is preferred. Such embodiments may be used where package containers 20 should be either collected (concave pusher plate 120) and pushed to a common location. Alternatively, it may be desirable to have package containers 20 dispersed to the sides of the pusher plate 120, in such cases a convex or perhaps even v-shaped pusher plate 120 may be utilized.

From the above, it is clear that the pusher plate 120 may be formed in any suitable way.

One benefit of forming the pusher plate 120, such that it does not form a homogenous surface is that a weight of the pusher plate is reduced and consequently the force needed to attach the pusher arrangement to the gripper unit 10 can be reduced. Preferably a mass center of the pusher arrangement 100 close to the interface plate 110 in order to reduce torque and one way of shifting the mass center is to reduce the weight of the pusher plate 120.

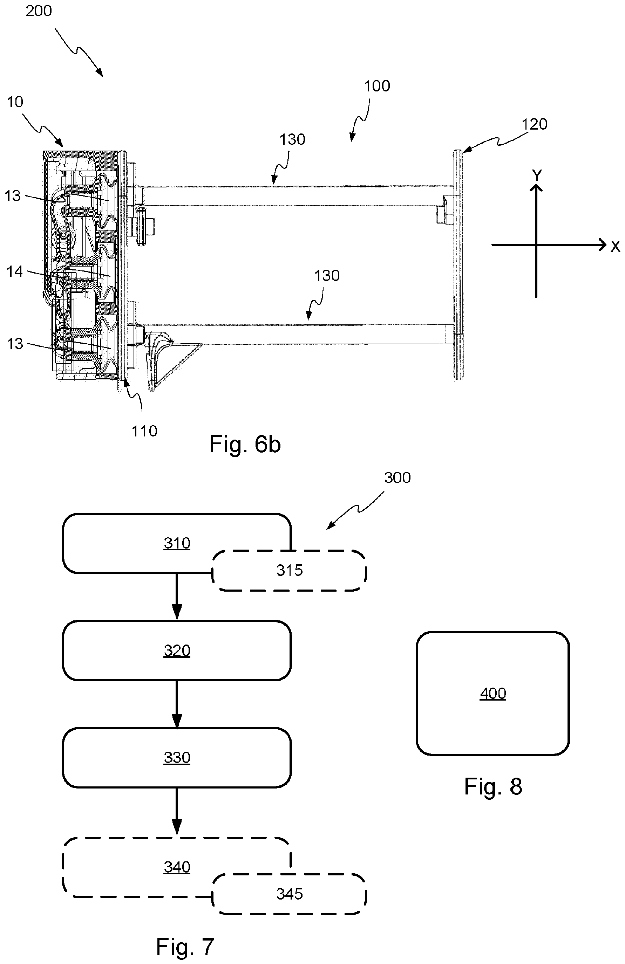

With reference to Fig. 6a-b, a pusher assembly 200 will be presented. The pusher assembly 200 may configured to be used on the gripper unit 10 of the robotic arm 5 and to be remove one or more misplaced packaging containers 20'. The pusher assembly 200 is comprised of one gripper unit 10 as has been explained in previous sections and one pusher arrangement 100 according to any embodiment presented. The pusher arrangement 100 is attached to the gripper unit 10 by means of at least one the vacuum suction cups 13 of the gripper unit 10. Using controllable vacuum suction cups 13 to attach the pusher arrangement 100 to the gripper unit 10 results in the pusher arrangement being of easy to release form the gripper unit 10. The release of the pusher arrangement is accomplished by reducing or removing a suction force provided by the suction cup(s) 13. In Fig. 6a a perspective view of a pusher assembly 200 according to an embodiment is shown. In Fig. 6b, a cross-sectional view of a pusher assembly 200 according to embodiments is shown.

With reference to Fig. 7, a method 300 for removing one or more misplaced packaging container 20' from a misplacement location 30, 40 will be described. As mentioned earlier, the misplacement location 30, 40 is exemplified as the area of the conveyor 30 or the secondary package 40 but the skilled person realizes that the misplacement location 30, 40 may be any location from where a misplaced packaging container 20', a packaging container 20 or any other form of unwanted items is to be removed. The method 300 may be initiated in numerous ways and one may by the detection of misaligned packaging containers 20'. The detection of misaligned packaging containers 20' may be performed by an automation system or the controller 50. The detection may be based on a partial or complete scan of the working area by a 3D camera system. A 2D system will typically suffice in providing the imagery needed to determine the need for intervention, but a 3D system will increase the reliability in the automation systems or controllers 50 ability to determine a clearing sequence, and confirm a successful sweep, i.e. completion of the method 300.

Upon initiation, the pusher arrangement 100 is connected 310 to the robotic arm 5. If the robotic arm 5 is provided with a gripper unit 10, this forms a gripper assembly 200 attached to the robotic arm 5. The connection 310 of the pusher arrangement 100 may be achieved by applying a suction force at the interface plate 110 of the pusher arrangement 100. In embodiments of the method 300, wherein the robotic arm 5 is provided with a gripper unit 10, the gripper unit 10 is typically used to connect 310 the pusher arrangement as detailed in previous sections. As mentioned earlier, the pusher arrangement 100 may, before connecting 310 to the robotic arm 5, be located at the idle location 60. In such embodiments, the step of connecting 310 the pusher arrangement 100 to the robotic arm 5 may comprise moving 315 the robotic arm 5 to the idle location 60 of the pusher arrangement 100 before connecting 310 the pusher arrangement 100 to the robotic arm 5.

With the pusher arrangement 100 attached to the robotic arm 5, the robotic arm 5 is moved 320 to position the pusher plate 120 of the pusher arrangement 100 proximate to the misplacement location 30,40.

At the misplacement location, packages to be removed 20' are pushed 330 away from the misplacement location 30, 40. The pushing 330 is achieved by moving the robotic arm 5 along the misplacement location 30, 40 such that the pusher plate 120 of the pusher arrangement 100 is moved along the misplacement location 30, 40 pushing packages to be removed 20' away from the misplacement location 30, 40.

Optionally, the method 300 may further comprise the step of disconnecting 340 the pusher arrangement 100 from the robotic arm 5. In embodiments wherein the robotic arm 5 comprises the gripper unit 10, this may be achieved by the gripper unit 10 reducing or removing suction force that is applied to the interface plate 110 of the pusher arrangement. The step of disconnecting 340 the pusher arrangement 100 may in embodiments wherein the pusher arrangement 100 was initially located at the idle location 60, comprise moving 345 or returning 345 the robotic arm 5 to position the pusher arrangement 100 at the idle location 60 prior to disconnecting 340 the pusher arrangement 100.

It should be noted that the method 300 described with reference to Fig. 7 is an overview and the skilled person realizes, after reading this disclosure that there may be further beneficial details and steps that are not explicitly shown or described with reference to Fig. 7. It should be understood that the method 300 is possible to adjust and alter such that it can be used with all embodiments and examples detailed in this disclosure. It may in embodiments be beneficial to adjust the method 300 depending on the misalignment location 30, 40, the number of misplaced packaging containers 20' and the number of packaging containers 20. It may be that more than one pusher arrangement 100 is available, e.g. at the idle location 60, and that different embodiments of the pusher arrangement 100 is used depending on the scenario. AS mentioned earlier, the scenario may be determined based on imagery form a 2D or 3D camera system.

In Fig. 8, a non-transitory computer-readable storage medium 400 is shown. In one embodiment of the storage medium 400, it is storing one or more software programs configured for execution by one or more processors. The one or more software programs comprising instructions for performing the method 300 as previously presented.

## Claims

1. A pusher assembly (200) configured to remove one or more misplaced packaging containers (20'), comprising:
a gripper unit (10) comprising at least one vacuum suction cup (13), wherein the gripper unit (10) is connected to a robotic arm (5), and
a pusher arrangement (100) comprising an interface plate (110), one or more extension means (130) and a pusher plate (120), wherein the pusher plate (120) is arranged spaced apart from the interface plate (110) by said one or more extension means (130),
wherein the interface plate (110) is releasably attached to the gripper unit (10) by means of said at least one vacuum suction cup (13).

2. Pusher assembly (200) according to claim 1, specially adapted for removing fallen or misaligned packaging containers (20).

3. The pusher assembly (200) according to claim 1 or 2, wherein the pusher plate (120) is substantially parallel to the interface plate (110).

4. The pusher assembly (200) of claim 3, wherein the pusher plate (120) is substantially centered relative to the interface plate (110) in at least one of a horizontal axis (X) or a vertical axis (Y).

5. The pusher assembly (200) of any of the preceding claims, wherein the pusher plate (120) is connected to the interface plate (110) by two extension means (130), wherein one of the extension means (130) is arranged in a substantially v-shaped form having its fulcrum (F) at the interface plate (110).

6. A pusher arrangement (100) configured for use on a gripper unit (10) of a robotic arm (5), comprising:
- an interface plate (110),
- one or more extension means (130) and,
- a pusher plate (120), wherein the pusher plate (120) is arranged spaced apart from the interface plate (110) by said one or more extension means (130),
wherein the interface plate (110) is configured to be releasably attached to the gripper unit (10) by means of at least one vacuum suction cup (13) of the gripper unit (10), wherein the pusher arrangement (100) is adapted for removing one or more misplaced packaging containers (20').

7. A method (300) for removing one or more misplaced packaging container(s) (20') from a misplacement location (30, 40), comprising:
connecting (310) a pusher arrangement (100) to a robotic arm (5) thereby forming a gripper assembly (200),
moving (320) the robotic arm (5) to position a pusher plate (120) of the pusher arrangement (100) proximate to the misalignment location (30, 40),
moving the robotic arm (5) along the misalignment location (30, 40) to remove (330) by means of the pusher arrangement (100) said one or more misaligned packaging containers (20') away from the misalignment location (30, 40).

8. The method (300) of claim 7, wherein the misalignment location (40) is situated at a secondary package (40).

9. The method (300) of claim 7, wherein the misalignment location (30, 40) is outside of a work space (70) of the robotic arm (5).

10. The method (300) of any of the claims 7 to 9, wherein the step of connecting (310) the pusher arrangement (100) to the robotic arm (5), comprises moving (315) the robotic arm (5) to an idle location (60) of the pusher arrangement (100).

11. The method (300) of any of the claims 7 to 10, further comprising disconnecting (340) the pusher arrangement (100) from the robotic arm (5).

12. The method (300) of claim 11 when depending on claim 10, further comprising, before the step of disconnecting (340) the pusher arrangement (100), returning (345) the robotic arm (5) to the idle location (60) of the pusher arrangement (100).

13. The method (300) of any of the claims 6 to 12, wherein the pusher arrangement (100) is the pusher arrangement (100) of any of the claims 5 or 6 and/or wherein the pusher assembly (200) is the pusher assembly (200) of any of the claims 1 to 4.

14. A non-transitory computer-readable storage medium (400), storing one or more software programs configured for execution by one or more processors, the one or more software programs comprising instructions for performing the method of any of the claims 7 to 13.
